# EUROPÄISCHE PATENTSCHRIFT

(11) **EP 4 129 714 B1**
(45) Veröffentlichungstag und Bekanntmachung des Hinweises auf die Patenterteilung: **29.05.2024**
(21) Anmeldenummer: 22186298.0
(22) Anmeldetag: 21.07.2022
(51) Int. Cl.: B60C 11/24

(54) **VERFAHREN ZUR VORHERSAGE EINES PROFILTIEFEN-VERLAUFES FÜR EINEN FAHRZEUGREIFEN**
METHOD FOR PREDICING A PROFILE DEPTH FOR A VEHICLE TYRE
PROCÉDÉ DE PRÉVISION D'UNE PROFONDEUR DE BANDE DE ROULEMENT POUR UN PNEU DE VÉHICULE

(30) Priorität: 04.08.2021 DE 102021208435
(43) Veröffentlichungstag der Anmeldung: 08.02.2023
(73) Patentinhaber: Continental Reifen Deutschland GmbH, 30175 Hannover (DE)
(72) Erfinder: Sahlmüller, Baldo, 30165 Hannover (DE); Gläser, Frank, 30165 Hannover (DE)
(74) Vertreter: Continental Corporation

(56) Entgegenhaltungen:
- WO-A1-2009/080409
- WO-A1-2020/120923
- WO-A1-2020/205703
- WO-A2-2019/239305
- DE-A1- 19 514 219
- US-A1- 2019 009 618

## Beschreibung

Die Erfindung betrifft ein Verfahren zur Vorhersage eines Profiltiefen-Verlaufes für einen Fahrzeugreifen.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile oder techniche Hürden besitzen.

Die US 2019/009618 A1 offenbart ein bekanntes Verfahren zur Vorhersage eines Profiltiefen-Verlaufes für einen Fahrzeugreifen,

Der Erfindung lag die Aufgabe zugrunde, ein Verfahren zur Vorhersage eines Profiltiefen-Verlaufes für einen Fahrzeugreifen bereitzustellen.

Gelöst wird die Aufgabe durch ein Verfahren nach Anspruch 1.

Ein Vorteil der Erfindung ist insbesondere darin zu sehen, dass mit dem neuen Verfahren der Profiltiefen-Verlauf am Fahrzeugreifen auf einfache Weise und mit einer guten Genauigkeit vorausgesagt werden kann.

Bei dem Verfahren werden eine Vielzahl von Abriebskurven für bestimmte Fahrzeugreifen aufgezeichnet. Die Abriebskurven werden für eine Vielzahl von unterschiedlichen Parametern aufgezeichnet und auf einem Datenspeicher abgelegt. Mit dem neuen Verfahren kann auf diese Daten der Abriebskurven bei der Vorhersage der Profiltiefe für den zukünftigen Verlauf der Profiltiefe zurückgegriffen werden. Dadurch lässt sich beispielsweise auf einfache Weise ermitteln, zu welchem Zeitpunkt in etwa ein Reifenwechsel erforderlich wird. Ein Flottenbetreiber kann dann für unterschiedliche Fahrzeuge den Reifenwechsel für verschiedene Werkstätten planen.

In einer vorteilhaften Weiterbildung der Erfindung ist vorgesehen, dass bei der Zuordnung der Abriebskurve die Abriebskurve gewählt wird, bei der die gemessene Profiltiefe der jeweiligen Abriebskurve am nächsten kommt.

Dadurch lässt sich die zugehörige Abriebskurve auf einfache Weise bestimmen.

In einer weiteren vorteilhaften Weiterbildung der Erfindung ist vorgesehen, dass bei zwei gemessenen Profiltiefen diejenige Abriebskurve gewählt wird, die beiden gemessenen Profiltiefen am nächsten kommt.

Die Profiltiefenmessung kann beispielsweise an unterschiedlichen Positionen am Fahrzeugreifen vorgenommen worden sein. Weichen beide Werte voneinander ab, wird ein Mittelwert gebildet und dieser mit den Abriebskurven verglichen. Die Profiltiefenmessungen können zu verschiedenen Laufleistungen des Fahrzeugreifens oder zu verschiedenen Zeitpunkten vorgenommen worden sein. Die Kurve, die den gemessenen Profiltiefen am nächsten kommt, kann hier zum Beispiel über die Methode der kleinsten Quadrate bestimmt werden.

In einer weiteren vorteilhaften Weiterbildung der Erfindung ist vorgesehen, dass mit der gemessenen Profiltiefe eine neue Abriebskurve berechnet wird, wobei die neue Abriebskurve eine gemittelten Abriebskurve darstellt, die zwischen zwei in der Nähe der gemessenen Profiltiefe liegenden Abriebskurven verläuft. Dadurch lässt sich der Verlauf der Profiltiefe mit einer höheren Genauigkeit voraussagen.

In einer weiteren vorteilhaften Weiterbildung der Erfindung ist vorgesehen, dass die Abriebskurven durch mathematische Funktionen abgebildet werden, die den Verlauf der Profiltiefe darstellen.

Dadurch wird die Voraussage der Profiltiefe vereinfacht.

In einer weiteren vorteilhaften Weiterbildung der Erfindung ist vorgesehen, dass die mathematischen Funktionen in Form einer Exponentialfunktion oder eines Polynoms gebildet werden.

Mit diesen mathematischen Funktionen lassen sich die Abriebsfunktionen mit einer hohen Genauigkeit nachbilden.

In einer weiteren vorteilhaften Weiterbildung der Erfindung ist vorgesehen, dass die Parameter bei den gemessenen Abriebskurven den Reifentyp umfassen.

Der Reifenabrieb hat einen bedeutenden Einfluss auf das Abriebverhalten des Fahrzeugreifens. Der Reifentyp kann beispielsweise ebenfalls die Reifendimension des Fahrzeugreifens umfassen.

In einer weiteren vorteilhaften Weiterbildung der Erfindung ist vorgesehen, dass die Parameter bei den gemessenen Abriebskurven die Achsposition des Fahrzeugreifens und/oder die Applikation für den Fahrzeugreifen umfassen.

Bei der Achsposition ist z.B. die Information wichtig, ob der Fahrzeugreifen an der Vorderachse oder an der Hinterachse montiert ist. Bei der Applikation kann z.B. eine Rolle spielen, ob es sich um einen Winterreifen oder einen Sommerreifen handelt.

In einer weiteren vorteilhaften Weiterbildung der Erfindung ist vorgesehen, dass die Parameter bei den gemessenen Abriebskurven den Fahrzeugtyp und/oder den Kundentyp umfassen.

Beim Fahrzeugtypen wird berücksichtigt, welche Motorisierung das Fahrzeug aufweist. Beim Kundentypen kann berücksichtigt werden, ob der Fahrzeugreifen an einem Fahrzeug montiert ist, das von einem Flottenbetreiber betrieben wird.

Anhand eines Ausführungsbeispiels wird die Erfindung im Folgenden näher beschrieben.

Es zeigt:
- Fig. 1:: ein Diagramm mit Abriebskurven
- Fig. 2.:: ein weiteres Diagramm mit Abriebskurven

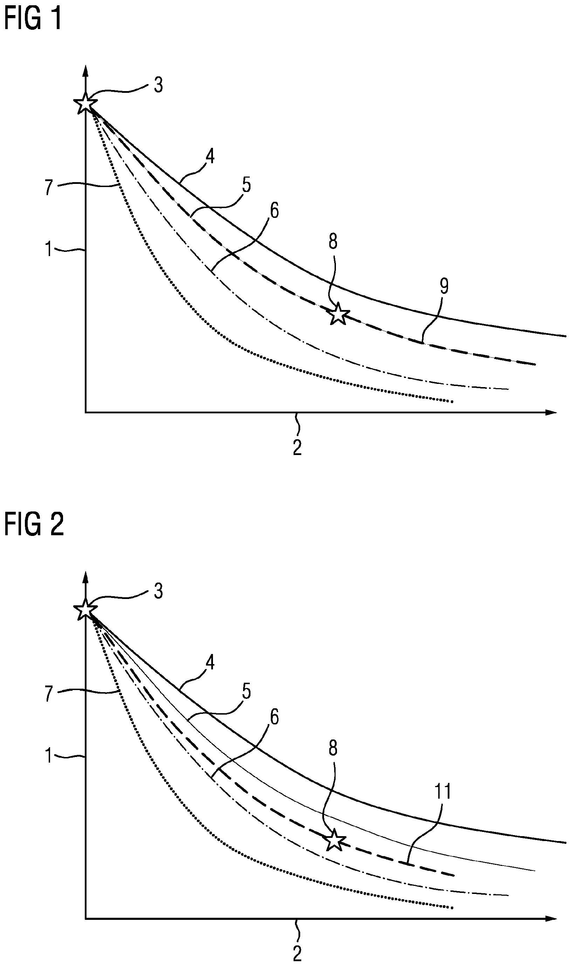

Die Figur 1 zeigt ein Diagramm mit einer Vielzahl von Abriebskurven 4 bis 7. Auf der X-Achse 2 ist die Laufleistung, z. B. in Kilometern, aufgetragen. Auf der Y-Achse 1 ist die Profiltiefe aufgetragen. Mit zunehmender Laufleistung nimmt die Profiltiefe des Fahrzeugreifens ab. Die unterschiedlichen Abriebskurven 4 bis 7, die Messungen von bestimmten Fahrzeugreifen wiedergeben, zeigen, dass der Abrieb bei den Fahrzeugreifen bei unterschiedlichen Parametern unterschiedlich verläuft.

Es werden mit Hilfe von bestehenden Daten Scharen von Abriebskurven 4 bis 7 von Reifen bestimmt, bei der die Profiltiefe 1 in Abhängigkeit von der Laufleistung 2 ermittelt wird.

Die Abriebskurven können anhand von Messungen der Profiltiefe an Reifen über einen zeitlichen Verlauf bzw. die Laufleistung des Fahrzeugreifens bestimmt werden.

Diese Kurvenscharen werden beispielsweise für ein Reifentyp bestimmt, wobei spezielle Parameter die Reifendimension und der Reifenname eines Reifenherstellers umfassen können.

Weitere mögliche Parameter, die einen wesentlichen Einfluss auf den Reifenabrieb haben, sind die Achsposition des Fahrzeugreifens und Applikation für den Fahrzeugreifen, ob es sich beispielsweise um einen Sommer- oder Winterreifen handelt. Weitere Applikationen können z.B. die Anwendung für einen NFZ-Reifen umfassen.

Weitere Parameter betreffen den Fahrzeugtypen auf dem der Fahrzeugreifen montiert ist und den Kundentypen, der das Fahrzeug fährt.

Die Kurven innerhalb der Kurvenscharen werden über mathematische Funktionen in der Form f = Protiltiefe (Laufleistung) angenähert.

Die Abriebskurven werden verwendet, um für Fahrzeugreifen den Verlauf der Profiltiefe vorherzusagen.

An einem bestimmen Fahrzeugreifen wird eine erste Profiltiefenmessung mit einem Messpunkt 8 durchgeführt.

Anschließend wird diejenige Abriebskurve aus der Kurvenschar für die Vorhersage des zukünftigen Reifenlebens ausgewählt, die dem Messpunkt 8, bestehend aus Laufleistung und Profiltiefe, am nächsten kommt. In der Figur 1 ist das die Abriebskurve 5.

Die Profiltiefe für den Fahrzeugreifen wird mit einer sehr hohen Wahrscheinlichkeit in Zukunft entlang der dargestellten Abriebskurve 5 verlaufen.

Falls eine zweite Profiltiefenmessung durchgeführt wird, wird diejenige Abriebskurve für die Vorhersage ausgewählt, die beiden Messpunkten am nächsten kommt. Die Nähe zu einer Ariebskurve kann über mathematische Methoden berechnet werden.

Die Figur 2 zeigt ein weiteres Ausführungsbeispiel für die Bestimmung einer geeigneten Abriebskurve.

Die Auswahl der Abriebskurve aus der Kurvenschar 4 bis 7 kann weiter verbessert werden, indem anhand der Messungen mit dem Messpunkt 10 eine neue Kurve 11 berechnet wird, die einen gewichteten Mittelwert der jeweils nächstliegenden Kurve 5 und 6 ober- und unterhalb des Messpunktes 10 beschreibt. Gegebenenfalls kann die Wichtung anhand der Nähe des Messpunktes zur jeweils nächstliegenden Kurve erfolgen.

Eine weitere mögliche Verbesserung besteht darin, dass die anfangs bestimmte Kurvenschar mit Hilfe einer gemeinsamen Funktion, beispielsweise einer Exponentialfunktion oder eines Polynoms, mathematisch beschrieben wird, so dass diese Funktion durch einen oder mehrere freie Parameter die Kurven der Kurvenschar beschreiben kann.

Bei einer oder mehreren Messungen der Profiltiefe würden die freien Parameter der Funktion so angepasst werden, dass die Kurve einen Verlauf annimmt, der die vorhandenen Messungen abbildet. Diese Anpassung kann wiederum über die Methode der kleinsten Quadrate erfolgen.

Ein Vorteil des neuen Verfahrens besteht darin, dass bereits recht früh eine Vorhersage des Abriebs des Fahrzeugreifens durchgeführt und der Zeitpunkt ermittelt werden kann, an dem der Reifen demontiert werden muss.

Aufgrund der Vorhersage kann der Reifenwechsel frühzeitig geplant werden. Liegt der Reifenwechsel noch weit in der Zukunft, wird eventuell eine zweite Messung durchgeführt.

### Bezugszeichenliste

- 1: Profiltiefe (y-Achxe)
- 2: Laufleistung (x-Achxe)
- 3: Anfangsprofiltiefe
- 4: Abriebskurve
- 5: Abriebskurve
- 6: Abriebskurve
- 7: Abriebskurve
- 8: Messpunkt der Profiltiefe
- 9: Ausgewählte Abriebskurve (gestrichelte Kurve)
- 10: Messpunkt
- 11: Neu berechnete Abriebskurve (Mittelung der benachbarten Kurven 5 und 6)

## Patentansprüche

1. Verfahren zur Vorhersage eines Profiltiefen-Verlaufes für einen Fahrzeugreifen mit den folgenden Schritten:
a) Bereitstellen einer Vielzahl von Abriebskurven (4,5,6,7) in einem Datenspeicher,
wobei die Abriebskurven (4,5,6,7) für verschiedene Parameter durch Messungen der Profiltiefe in Abhängigkeit von der Laufleistung eines Fahrzeugreifens bestimmt werden,
b) Messung von mindestens einer Profiltiefe (8) an dem Fahrzeugreifen nach einer bestimmten Laufleistung,
c) Vergleichen der gemessenen Profiltiefe (8) mit den bereit gestellten Abriebskurven (4,5,6,7),
**dadurch gekennzeichnet, dass**
d) eine Zuordnung einer Abriebskurve zu dem Fahrzeugreifen, wobei die Zuordnung der Abriebskurve mit der gemessenen Profiltiefe (8) und der Laufleistung erfolgt,
e) Vorhersage des weiteren Profiltiefen-Verlaufes für den Fahrzeugreifen mit der zugeordneten Abriebskurve.

2. Verfahren nach Anspruch 1,
**dadurch gekennzeichnet, dass**
bei der Zuordnung der Abriebskurve (4,5,6,7) die Abriebskurve gewählt wird, bei der die gemessene Profiltiefe (8) der jeweiligen Abriebskurve am nächsten kommt.

3. Verfahren nach einem der vorhergehenden Ansprüche,
**dadurch gekennzeichnet, dass**
bei zwei gemessenen Profiltiefen diejenige Abriebskurve gewählt wird, die beiden gemessenen Profiltiefen am nächsten kommt.

4. Verfahren nach einem der vorhergehenden Ansprüche,
**dadurch gekennzeichnet, dass**
mit der gemessenen Profiltiefe (10) eine neue Abriebskurve (11) berechnet wird,
wobei die neue Abriebskurve (11) eine gemittelten Abriebskurve darstellt, die zwischen zwei in der Nähe der gemessenen Profiltiefe liegenden Abriebskurven verläuft.

5. Verfahren nach einem der vorhergehenden Ansprüche,
**dadurch gekennzeichnet, dass**
die Abriebskurven (4,5,6,7) durch mathematische Funktionen abgebildet werden, die den Verlauf der Profiltiefe darstellen.

6. Verfahren nach einem der vorhergehenden Ansprüche,
**dadurch gekennzeichnet, dass**
die mathematischen Funktionen in Form einer Exponentialfunktion oder eines Polynoms gebildet werden.

7. Verfahren nach einem der vorhergehenden Ansprüche,
**dadurch gekennzeichnet, dass**
die Parameter bei den gemessenen Abriebskurven (4,5,6,7) den Reifentyp umfassen.

8. Verfahren nach einem der vorhergehenden Ansprüche,
**dadurch gekennzeichnet, dass**
die Parameter bei den gemessenen Abriebskurven (4,5,6,7) die Achsposition des Fahrzeugreifens und/oder die Appliaktion für den Fahrzeugreifen umfassen.

9. Verfahren nach einem der vorhergehenden Ansprüche,
**dadurch gekennzeichnet, dass**
die Parameter bei den gemessenen Abriebskurven (4,5,6,7) den Fahrzeugtyp und/oder den Kundentyp umfassen.

## Claims

1. Method for predicting a development of the profile depth for a vehicle tyre, comprising the following steps:
a) providing a multiplicity of wear curves (4, 5, 6, 7) in a data memory,
wherein the wear curves (4, 5, 6, 7) are determined for different parameters by measurements of the profile depth in dependence on the mileage or kilometrage of a vehicle tyre,
b) measuring at least one profile depth (8) on the vehicle tyre after a particular mileage or kilometrage,
c) comparing the measured profile depth (8) with the wear curves (4, 5, 6, 7) provided,
**characterized in that**
d) assigning a wear curve to the vehicle tyre,
wherein the assignment of the wear curve takes place using the measured profile depth (8) and the mileage or kilometrage,
e) predicting the further development of the profile depth for the vehicle tyre using the assigned wear curve.

2. Method according to Claim 1,
**characterized in that**
in the assignment of the wear curve (4, 5, 6, 7), the wear curve for which the measured profile depth (8) comes closest to the respective wear curve is chosen.

3. Method according to one of the preceding claims,
**characterized in that**
when there are two measured profile depths, the wear curve that comes closest to both measured profile depths is chosen.

4. Method according to one of the preceding claims,
**characterized in that**
using the measured profile depth (10), a new wear curve (11) is calculated,
wherein the new wear curve (11) represents an average wear curve that extends between two wear curves lying in the vicinity of the measured profile depth.

5. Method according to one of the preceding claims,
**characterized in that**
the wear curves (4, 5, 6, 7) are depicted by mathematical functions which represent the development of the profile depth.

6. Method according to one of the preceding claims,
**characterized in that**
the mathematical functions are provided in the form of an exponential function or a polynomial.

7. Method according to one of the preceding claims,
**characterized in that**
the parameters for the measured wear curves (4, 5, 6, 7) comprise the tyre type.

8. Method according to one of the preceding claims,
**characterized in that**
the parameters for the measured wear curves (4, 5, 6, 7) comprise the axial position of the vehicle tyre and/or the application for the vehicle tyre.

9. Method according to one of the preceding claims,
**characterized in that**
the parameters for the measured wear curves (4, 5, 6, 7) comprise the vehicle type and/or the customer type.

## Revendications

1. Procédé permettant de prédire un tracé de profondeur de sculpture pour un pneu de véhicule, comprenant les étapes suivantes consistant à :
a) fournir une pluralité de courbes d'usure (4, 5, 6, 7) dans une mémoire de données,
dans lequel les courbes d'usure (4, 5, 6, 7) sont déterminées pour différents paramètres par des mesures de la profondeur de sculpture en fonction de la performance kilométrique d'un pneu de véhicule,
b) mesurer au moins une profondeur de sculpture (8) sur un pneu de véhicule après une performance kilométrique déterminée,
c) comparer la profondeur de sculpture (8) mesurée avec les courbes d'usure (4, 5, 6, 7) fournies,
**caractérisé en ce que**
d) associer d'une courbe d'usure au pneu de véhicule,
l'association de la courbe d'usure étant effectuée avec la profondeur de sculpture (8) mesurée et la performance kilométrique,
e) prédire la suite du tracé de profondeur de sculpture pour le pneu de véhicule avec la courbe d'usure associée.

2. Procédé selon la revendication 1,
**caractérisé en ce que**
lors de l'association de la courbe d'usure (4, 5, 6, 7), on choisit la courbe d'usure pour laquelle la profondeur de sculpture (8) mesurée se rapproche le plus de la courbe d'usure respective.

3. Procédé selon l'une quelconque des revendications précédentes, **caractérisé en ce que**
dans le cas de deux profondeurs de sculpture mesurées, on choisit la courbe d'usure qui se rapproche le plus des deux profondeurs de sculpture mesurées.

4. Procédé selon l'une quelconque des revendications précédentes, **caractérisé en ce que**
une nouvelle courbe d'usure (11) est calculée avec la profondeur de sculpture (10) mesurée,
dans lequel la nouvelle courbe d'usure (11) représente une courbe d'usure moyennée qui s'étend entre deux courbes d'usure situées à proximité de la profondeur de sculpture mesurée.

5. Procédé selon l'une quelconque des revendications précédentes, **caractérisé en ce que**
les courbes d'usure (4, 5, 6, 7) sont mappées par des fonctions mathématiques qui représentent le tracé de la profondeur de sculpture.

6. Procédé selon l'une quelconque des revendications précédentes, **caractérisé en ce que**
les fonctions mathématiques sont formées sous forme de fonction exponentielle ou de polynôme.

7. Procédé selon l'une quelconque des revendications précédentes, **caractérisé en ce que**
les paramètres des courbes d'usure (4, 5, 6, 7) mesurées comprennent le type de pneu.

8. Procédé selon l'une quelconque des revendications précédentes, **caractérisé en ce que**
les paramètres des courbes d'usure (4, 5, 6, 7) mesurées comprennent la position axiale du pneu de véhicule et/ou l'application pour le pneu de véhicule.

9. Procédé selon l'une quelconque des revendications précédentes, **caractérisé en ce que**
les paramètres des courbes d'usure (4, 5, 6, 7) mesurées comprennent le type de véhicule et/ou le type de client.
